# EUROPEAN PATENT APPLICATION

(11) **EP 3 525 215 A1**
(43) Date of publication of application: **14.08.2019**
(21) Application number: 18305132.5
(22) Date of filing: 08.02.2018
(51) Int. Cl.: H01B 7/40, H02G 3/04, H02G 3/00, B65D 63/10

(54) **TANGLE FREE CABLE SYTEM**

(71) Applicant: Nexans, 92400 Courbevoie (FR)
(72) Inventor: ANDERSSON, Per-Erik, 51434 Tranemo (SE)
(74) Representative: Lenne, Laurence

(57) **Abstract**

A tangle free cable system (150) is provided. The tangle free cable system comprises a cable (100) and a gripping material (110), wherein the gripping material (110) extends along at least a part of the length of the cable (100).

## Description

### Technical Field

The present invention relates to a cable system, and more specifically to a cable that is less prone to winding during storage and use.

### Background

It has become increasingly popular to use at least in part electrically driven vehicles. The batteries of electrically driven vehicles are often charged using a charging cable connected to a power source. These charging cables can be very long, extending above 10 meters in length, thus allowing the user to charge the car even if the distance from the car and the power source is long. When the car is to be charged, the user connects one end of the charging cable to the car. If the car is parked close to the power source there will be a long part of the charging cable that is not used. This unused part of the charging cable may tangle, and there is a risk that the cable can form a knot or fold over on itself or in any other way cause tangling of the cables. This may cause damages to the cable.

When the charging cable is not in use, it may be stored in the place of charging or being kept inside the vehicle. The length of the charging cable makes it hard to store it without causing tangling of the cable.

There is therefore a need for a solution that eliminates or at least reduces the risk of cable tangling when unpacking and storing the charging cable. Furthermore, there is a need for a solution that allows for a space effective storing of the charging cable.

### Summary

Accordingly, the present invention preferably seeks to mitigate, alleviate or eliminate one or more of the above-identified deficiencies in the art and disadvantages singly or in any combination and solves at least the above mentioned problems by providing a tangle free cable system where the cable is less prone to winding during storage and use.

In a first aspect, a tangle free cable system is provided. The system comprises a cable and a gripping material, wherein the gripping material extends along at least a part of the length of the cable. The gripping material allows the cable to be connected to itself or to other structures. This prevents the cable from moving, and hence preventing the cable from tangling or causing disorder. The gripping material is arranged such that the cable easily can be released from itself or a structure in a controlled and secure manner which reduces the risk of getting damages to the cable.

The gripping material may extend along at least 50% of the length of the cable.

In one embodiment, the gripping material is twisted around the cable.

The gripping material may be in the form of a strap comprising a first side and a second side.

The first side of the gripping material may comprise both male and female structures. The male and female structures may be arranged in sequence. In one embodiment, the male structures are hooks and the female structures are loops.

In one embodiment the first side of the gripping material comprises a structure that acts both as a male and a female structure.

In one embodiment, the second side of the gripping material is flat. At least a part of the second side of the gripping material is arranged with an adhesive layer.

The gripping material may extend along the surface of the cable.

In one embodiment, the cable is a charging cable for a vehicle.

The cable system may further comprise a surface being arranged with at least a second gripping material configured to at least in part being attachable to the gripping material of the cable.

In a second aspect, a method of manufacturing a tangle free cable system is provided. The method comprises the steps of providing a cable, providing a gripping material having a first and a second surface, and fastening the gripping material to at least a part of the surface of the cable so as to form a tangle free cable system.

The method may further comprise the step of applying an adhesive layer to at least a part of the second surface of the gripping material.

In one embodiment, the method further comprises the step of applying an adhesive layer to at least a part of the surface of the cable.

The step of fastening the gripping material to the cable may be performed by twisting the gripping material around the cable.

In a third aspect, a method of using a tangle free cable system according the first aspect is provided. The method comprises the steps of providing a tangle free cable system, gathering at least a part of the length of the cable into an assembly, and
fastening the gathered assembly to each other.

### Brief Description of Drawings

These and other aspects, features and advantages of which the invention is capable of will be apparent and elucidated from the following description of embodiments of the present invention, reference being made to the accompanying drawings, in which
Fig. 1 is a top view of a tangle free cable according to an embodiment;
Fig. 2a is a top view of a tangle free cable according to an embodiment;
Fig. 2b is a top view of a tangle free cable according to an embodiment;
Fig. 3a is a side view of a tangle free cable system according to an embodiment;
Fig. 3b is a side view of a tangle free cable system according to an embodiment;
Fig. 4a is a top cross-sectional view of a tangle free cable according to an embodiment;
Fig. 4b is a top cross-sectional view of a tangle free cable according to an embodiment;
Fig. 4c is a top cross-sectional view of a tangle free cable according to an embodiment;
Fig. 5a is an isometric top view of a tangle free cable according to an embodiment;
Fig. 5b is an isometric top view of a tangle free cable according to an embodiment;
Fig. 5c is an isometric top view of a tangle free cable according to an embodiment;
Fig. 6 is a block scheme of a method for manufacturing a tangle free cable according to an embodiment; and
Fig. 7 is a block scheme of a method of using a cable according to an embodiment.

### Detailed Description

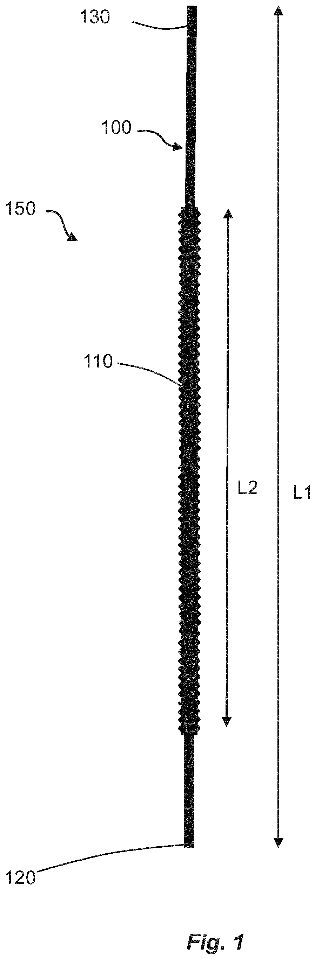

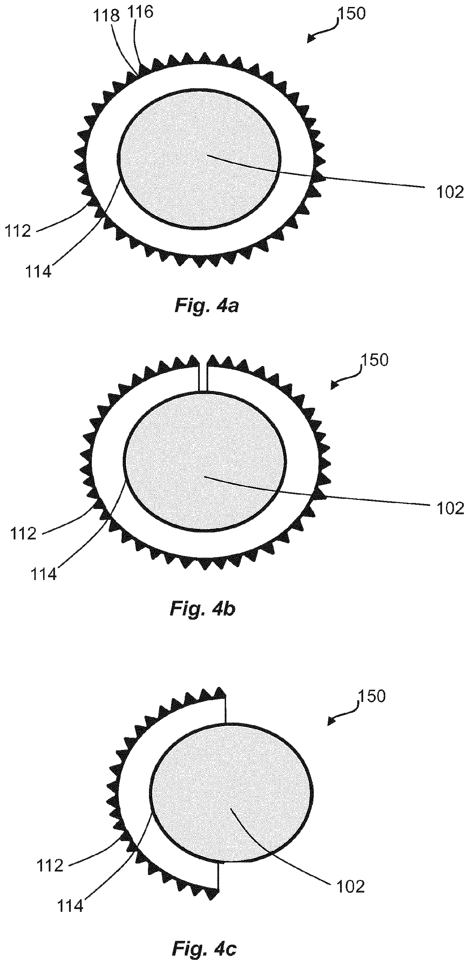

Fig. 1 illustrates an embodiment of a tangle free cable system 150 comprising an electrical cable 100 being arranged with a gripping material 110. The cable 100 has a first end 120 and a second end 130, arranged opposite to each other. The cable has a core 102 (as seen in Figs. 4a-c), and a surface area 104 being arranged around the core 102 of the cable 100.

The cable 100 has a length L1. The length L1 depends on the type of cable 100 and its intended applications. The length of the cable 100 may for example vary between 50 cm and 100 meters. The diameter of the cable 100 also varies depending on its intended use.

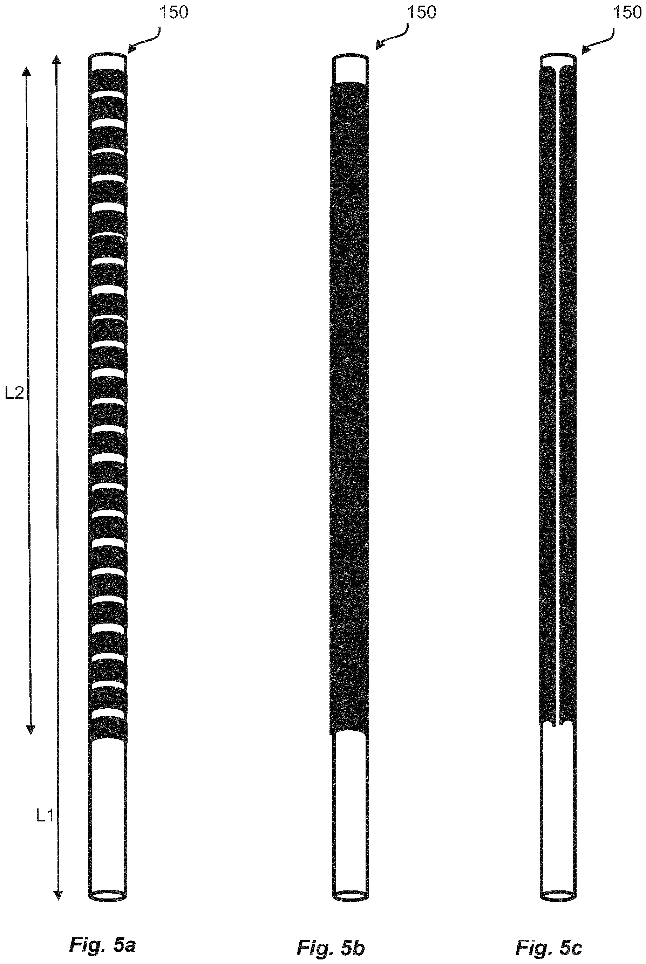

The tangle free cable 100 is at least in part provided with a gripping material 110 in order to create a tangle free cable system 150. The gripping material 110 is arranged on the surface area 104 of the cable 100. The gripping material 110 extends along at least a part of the length of the cable 100. The gripping material 110 may extend along at least 10% of the length of the cable 100, and more preferably along at least 50% of the length of the cable. In a preferred embodiment, essentially the whole length of the cable 100 is arranged with the griping material 110. As seen in Fig. 1, the gripping material 110 extends along a length L2. The lengths L1 and L2 may be the same, or the length L1 may be larger than the length L2. The details of the gripping material will be discussed further with reference to Figs. 4 and 5.

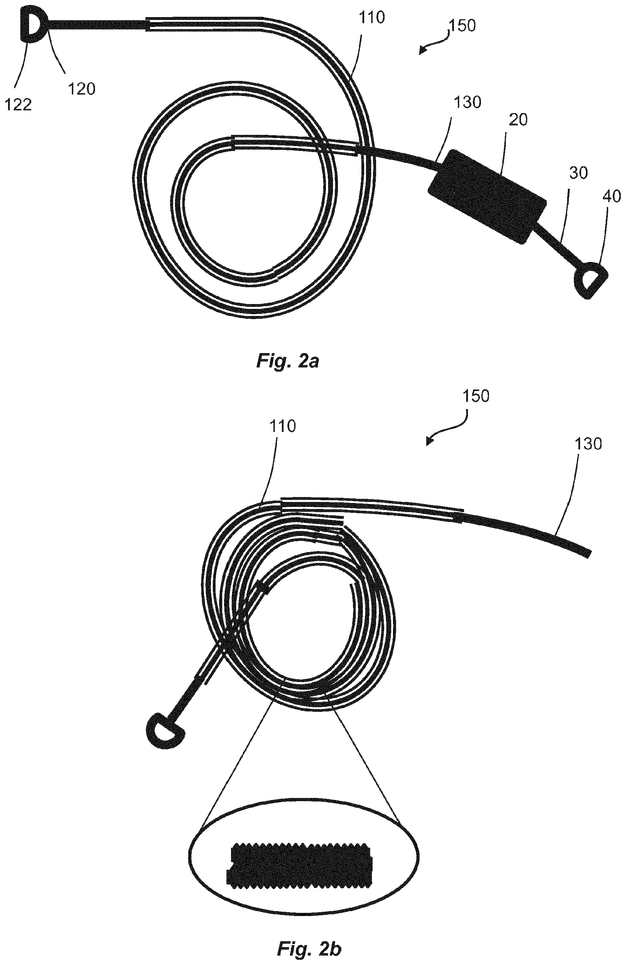

Fig. 2a illustrates an embodiment of a tangle free cable system 150 having a cable 100 that is attached to a plurality of electrical connectors. The first end 120 of the cable 100 is provided with a first electrical connector. The first electrical connector may be male-ended such as a plug or female ended such as a jack. The electrical connector may be a power connector such as a socket or receptacle. The second end 130 of the cable 100 may be provided with a second electrical connector or being connected to a device 20 such as a charging box, an adapter or similar. The device 20 may in turn be connected to a further cord 30 being provided with an electrical connector 40.

The cable 100 described herein could be any kind of cable or cord. The cable could for example be an electrical cable, a fiber optic cable or a coaxial cable. The cable may be used as an extension cord or a primary cable. In one embodiment, the cable is a charging cable 100 for an electric vehicle in the form of a car. A charging cable 100 for a vehicle is often between 1 and 10 meters long. In an embodiment where the cable is 8 meters long, the gripping material may for example extend for at least 4 meters.

A long charging cable 100 enables the user to be more flexible when charging its electric vehicle. Hence, the vehicle can be charged even if the distance from the vehicle and the power source is great. When the car is to be charged, the user connects one end, either the first end 120 or the second end 130 depending on the construction of the cable 100, of the charging cable 100 to the car. If the car is parked closed to the power source, the long length of the charging cable may be problematic. There is a risk that the unused length of the charging cable may tangle. The cable being tangled may cause the user to trip and fall over the cable 100 or there is a risk that the cable can form a knot or fold over on itself and subsequently cause damage to the cable. It would thus be beneficial if the cable 100 could be rolled or bunched together so that the unused length of the cable is gathered together. This is solved by the gripping material 110 arranged on at least a part of the outer surface of the cable 100.

Being able to gather the cable into a compact cable unit is also beneficial when the cable 100 is not being used. The cable 100 might be stored inside the vehicle, and it is thus beneficial that it is compact and as space efficient as possible.

Although the above benefits were described with reference to a charging cable for a vehicle, any type of cable would benefit from the inventive idea of arranging the cable with a gripping material. For example, a cable 100 being arranged with a gripping material 110 could be used to in semi-fixed installation such as temporary events or building constructions. The gathering of the cable for example reduces the risk of stumbling on a cable and getting injured and/or damaging the cable and reduces the risk of the cable being exposed to water on the floor/ground.

Moreover, the gripping material prevents the cable from moving, and hence preventing the cable from tangling or causing disorder. The gripping material is arranged such that the cable easily can be released from itself or a structure in a controlled and secure manner which reduces the risk of getting damages to the cable.

As soon will be discussed further, the gripping material 110 may in some embodiments be such that it is able to connect to itself. If the parts of the cable 100 being arranged with gripping material 100 are bunched or gathered together, the gripping material 100 arranged on each surface will grip into each other and thus creates a cable unit or assembly. Thus, if the gripping material extends along a long length of the cable, most part of the cable can be easily rolled-up on itself. It is thus easy for the user to bunch the cable into a single compact unit, without the need of tiresome rolling up the cable around a traditional roll.

Fig. 2b illustrates a cable system 150 being gathered together into a more compact unit or assembly by the use of the gripping material 110. As is seen in the enlargement, different parts of the cable 100 are attached to one another using the gripping material 110. In this exemplary embodiment, three sections of the cable are connected to each other. However, it should be understood that any number of sections could be connected.

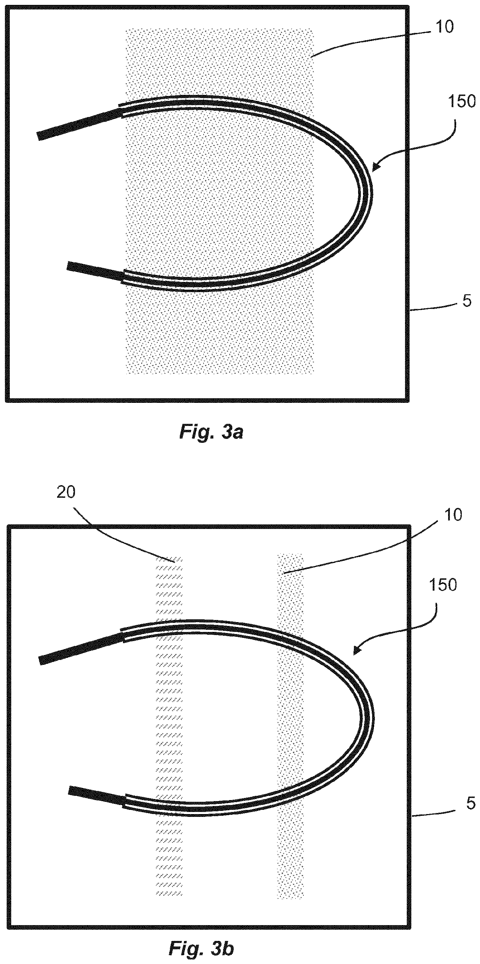

Figs 3a-b illustrates two embodiments where the cable system 150 may be arranged at a surface 5 for easy storage of the cable. The surface 5 may be a wall, floor, a machine, pipeline or similar structure. The surface 5 may be arranged with at least one portion of a second gripping material 10 and/or at least one portion of a third gripping material 20. The second and third gripping material 10, 20 may be the same or different as the gripping material 110 arranged on the cable 100. Moreover, the second and third gripping material 10, 20 may be different from each other. The second and/or third gripping material 10, 20 may be arranged with male structures, female structures, a combination of both or arranged with a structure that acts both as a female and a male, such as for example a hook that is able to connect to itself. It is preferred if the second and third gripping material 20, 30 is fastened to the surface using adhesive.

As shown in Fig. 3a, the surface 5 is arranged with an area of a second gripping material 10. In this specific embodiment, the area of the second gripping material covers an area of the surface 5 to which it is attached so that the cable can be arranged thereon. As should be understood, the dimensions of the area of the second gripping material 10 and its location on the surface or floor depends on the dimension of the cable 100.

As shown in Fig. 3b, the surface 5 may be arranged with a plurality of strips of a second gripping material 10 and/or a third gripping material. In the specific embodiment of Fig. 3b, the surface 5 is covered with one stripe of a second gripping material 10 and one stripe of a third gripping material 20. Here, the strips are
arranged as two vertically arranged strips. The second gripping material 10 may for example be arranged with male structures, whereas third gripping material 20 is arranged with female structures. The structure of the gripping material(s) depend on the structure of the gripping material 110 of the cable system 150. In this way it is possible to prevent the wrong cable from being placed at a wrong position, since the cable system 150 only will connect with a gripping material 20, 30 that is suitable for connection with its specific gripping material 110.

Although not shown, the surface 5 could be arranged with an area of gripping material that comprises both a second and a third gripping material 20, 30. The different materials 20, 30 may be arranged in sequence or in other suitable pattern. This may prevent the cable system 150 from being bent more than a predetermined diameter. Hence, the winding diameter of the cable 100 can be controlled. This is especially beneficial for fiber optical cables that is easily damaged.

Cross-sectional views of the cable 100 being arranged with a gripping material 110 is seen in Figs. 4a-c. The gripping material 110 may be in the form of a strap, strip or band. The length of the strap depends on the length of the charging cable 100. The strap has a first side 112 and a second side 114. Once the gripping material 110 is arranged on the cable 100, the first side 112 is facing away from the core 102 of the cable 100. The second side 114 is facing towards the core 102 of the cable 100.

Fig. 4a, illustrates a cross-sectional view of the cable where the gripping material 110 is arranged all around the core 102 surface of the cable 100. This is preferably done by attaching the strap of gripping material using a twisting action. Hence, the strap 110 is twisted around the charging cable 100.

The strap 110 is twisted around the cable 100 such that the second side 114 is facing the core 102 of the cable 100 and the first side 112 is facing the opposite direction. The second side 114 of the strap may be arranged with an adhesive in order to further increase the fastening. Additionally, or alternative, the surface of the cable 100 may be arranged with adhesive before arranging the gripping material 110 thereto.

Figs. 4b and 4c, illustrates cross-sectional views of a cable system 150 where the gripping material 110 is arranged on parts of the circumference of the core 102 surface of the cable 100. The gripping material 110 is arranged to the cable 100 using adhesive. The adhesive could be applied to the second side 114 of the strap and/or to the surface of the cable 100.

In the embodiment illustrated in Fig. 4b, the dimensions of the strap 110 is such that it is capable of at least in part enclosing the cable 100. If the dimension of the strap is smaller, two separate straps could be attached to the cable 100 to at least in part enclose the cable in the strap 110. In the embodiment illustrated in Fig. 4c, the dimensions of the strap 110 is such that approximately half of the circumference is covered by the strap 110.

The gripping material 110 may be arranged with male structures, female structures or a combination of both. Additionally or alternatively, the gripping material may be arranged with a structure that acts both as a female and a male, and which thus be seen as a homo-connector. This could for example be a hook that is able to connect to itself.

In the embodiments shown in Figs. 4a-c, the first side 112 of the gripping material 110 comprises a structure that acts both as a male and a female structure or it comprises a structure that has both male structures 116 and female structures 118. The second side 114 of the gripping material 110 is substantially flat. At least a part of the second side 114 of the gripping material 110 may be arranged with an adhesive layer in order to increase the fastening to the cable 100.

In an alternative embodiment, both the first and second side 112, 114 of the gripping material 110 is arranged with male and female structures 116, 118.

The male and female structures 116, 118 may be of a hook and loop construction, where the male structure 116 is a hook and the female structure 118 is a loop. Preferably, the gripping material 110 comprises alternating rows or arrays of hooks 116 and loops 118 on the same surface side 112. The gripping material 110 may be seen as small bands of hook elements 116 having bands of grooves or loops 118 in between. The loop regions 118 may be parallel to the direction of orientation of the hook regions 116. The loop regions 118 may be arranged between every hook row 116. In other cases there may be more rows of hooks between the regions of loops.

Although not shown explicitly in the Figures herein, the gripping material 110 could preferably be a structure that acts both as a female and a male.

The gripping material 110 may be a Velcro-strip. Nylon, polyester, polypropylene, and/or aramid fibers can for example be used to manufacture the gripping material 110. The loops 118 may be a woven loop structure (e.g., having napped or unnapped loops), a knitted loop structure and/or a non-woven loop structure. The fastener elements of the hook component 116 may be hooks having single crooks or may be of palm tree, flat topped stem or mushroom shape.

Figs. 5a-c illustrates isometric top views of three different embodiments of a cable 100 being arranged with a gripping material 110. Fig. 5a illustrates an embodiment where the gripping material 110 is twisted around the length of the cable 100. The length L2 which the gripping material 110 extends along the cable 100 may not be the same as the length of the gripping material 110. If for example the gripping material 110 is fastened to the cable by twisting, the length of the gripping material 110 is longer than the length L2 that it extends along the cable 100.

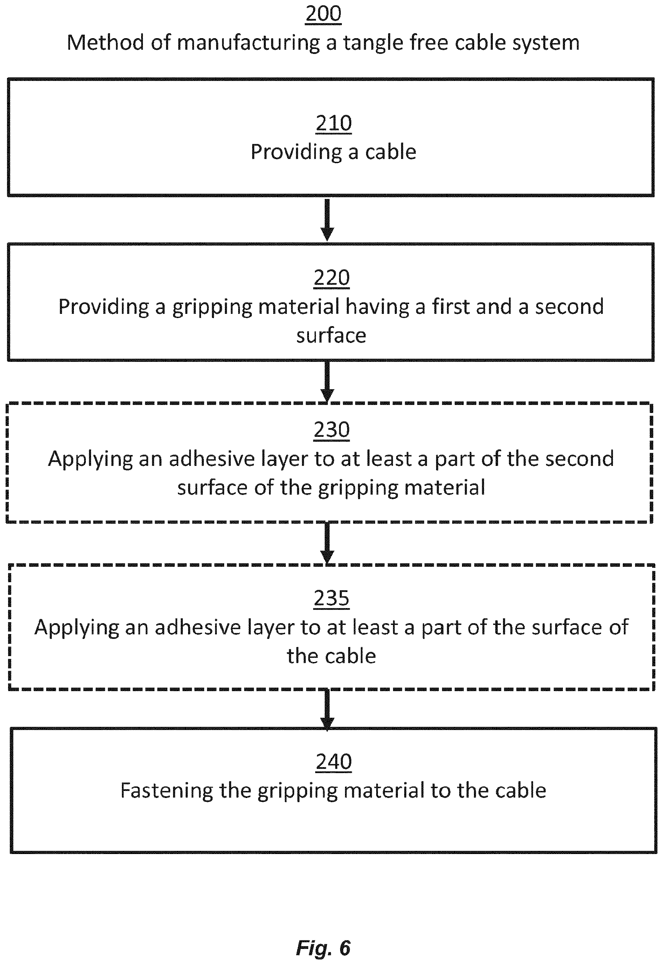

Fig. 5b illustrates an embodiment where the gripping material 110 is encircling the cable 100. Fig. 5c illustrates an embodiment where the gripping material 110 is at least in part encircling the cable 100. The gripping material 110 may in these cases be arranged using adhesive or by a joining process that for example uses heat causing the materials of the cable and the second side 114 of the cable 100 to melt together into the tangle free cable system 150. The cable 100 and the gripping material 110 could also be joined together in other ways during the manufacturing process. A method 200 of manufacturing a tangle free cable system 150 is shown in Fig. 6. In a first step 210, a cable 100 having a length L1 is provided. In a next step 220, a gripping material 110 is provided having a first surface 112 and a second surface 114.

In an optional step 230, an adhesive layer is applied to at least a part of the second surface 114 of the gripping material 110. Additionally or alternatively, an adhesive layer is applied 235 to at least a part of the surface of the cable 100.

In a next step 240, the gripping material is fastened to the cable 100. This may be done by a twisting action or by, using adhesive, laying the gripping material 110 on top of the cable 100. A tangle free cable 100 is now provided. The gripping material could also be fastened by a joining process that for example uses heat causing the materials of the cable and the second side 114 of the cable 100 to melt together into the tangle free cable system 150.

The step of fastening the gripping material to the cable 100 could also be performed by replacing the circumferential surface of the cable with the gripping material 110.

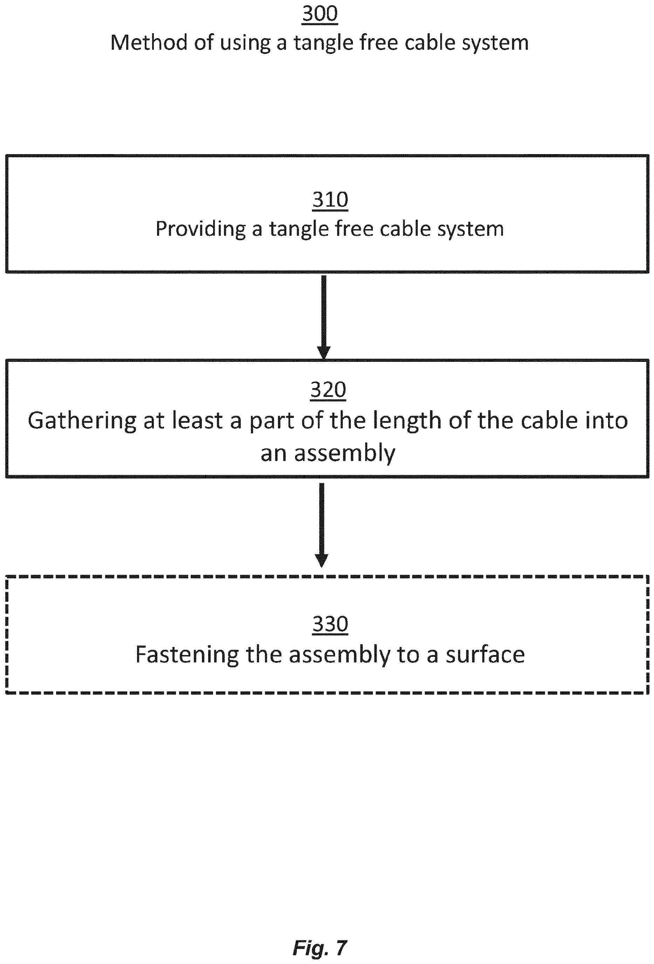

A method 300 of using the tangle free cable system 150 is shown in Fig. 7. In a first step, a tangle free cable system 150 is provided 310 comprising a cable 100 and a gripping material 110. The method further comprises gathering 320 different sections of the cable system 150 together into a unit, assembly or similar. The different sections of the cable 100 may be gathered into a compact unit by for example rolling, wrapping and/or twisting the cable around itself. When different sections of the cable, being arranged with a gripping material 110, are adjacent to each other the gripping material on each section connects to each other.

In an optional step 330, the assembly is fasten to a gripping material 20, 30 arranged on a surface 5.

In one embodiment, the cable 100 and the gripping material 110 are sold as one unit in the form of a tangle free cable system 150. In this embodiment, the gripping material 110 shall not only be seen as an accessory to be used only during storage of the cable but as a stationary part of the cable 100.

In an alternative embodiment, the cable 100 and the gripping material 110 are sold as separate units. The gripping material 110 is sold as an accessory where the user attaches a suitable length of gripping material 110 the his/her cable.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

## Claims

1. A tangle free cable system (150) comprising a cable (100) and a gripping material (110), wherein the gripping material (110) extends along at least a part of the length of the cable (100).

2. The cable system (150) according to claim 1, wherein the gripping material (110) is twisted around the cable (100).

3. The cable system (150) according to any of claims 1 to 2, wherein the gripping material (110) is in the form of a strap comprising a first side (112) and a second side (114).

4. The cable system (150) according to claim 3, wherein the first side (112) of the gripping material (110) comprises a structure that acts both as a male and a female structure.

5. The cable system (150) according to claim 4, wherein the first side (112) of the gripping material (110) comprises both male and female structures (116, 118).

6. The cable system (150) according to claim 5, wherein the male and female structures (116, 118) are arranged in sequence.

7. The cable system (150) according to claim any one of claims 3 to 6, wherein the second side (114) of the gripping material (110) is flat.

8. The cable system (150) according to claim any one of claims 3 to 7, wherein at least a part of the second side (114) of the gripping material (110) is arranged with an adhesive layer.

9. The cable system (150) according to any one of the preceding claims, wherein the gripping material (110) extends along the surface of the cable (100).

10. The cable system (150) according to any one of the preceding claims, further comprising a surface (5) being arranged with at least a second gripping material (20) configured to at least in part being attachable to the gripping material (110) of the cable (100).

11. The cable system (150) according to any one of the preceding claims, wherein the cable (100) is a charging cable for a vehicle.

12. A method (200) of manufacturing a tangle free cable system comprising the steps of:
providing (210) a cable;
providing (220) a gripping material having a first and a second surface; and
fastening (240) the gripping material to at least a part of the surface of the cable so as to form a tangle free cable system.

13. The method according to claim 12, wherein the method further comprises the step of applying an adhesive layer to at least a part of the second surface of the gripping material and/or applying an adhesive layer to at least a part of the surface of the cable.

14. The method according to claims 12 or 13, wherein the step of fastening the gripping material to the cable is performed by twisting the gripping material around the cable.

15. A method (300) of using a tangle free cable system, the method comprising the steps of:
providing (310) a tangle free cable system according to any of claims 1 to 11;
gathering (320) at least a part of the length of the cable into an assembly; and
fastening (330) the gathered assembly to each other.
